# EUROPEAN PATENT APPLICATION

(11) **EP 0 771 940 A1**
(43) Date of publication of application: **07.05.1997**
(21) Application number: 95307754.2
(22) Date of filing: 31.10.1995
(51) Int. Cl.: F02B 19/16, F02B 23/06

(54) **An internal-combustion engine having a pre-combustion chamber**

(71) Applicant: ISUZU CERAMICS RESEARCH INSTITUTE CO., LTD., Fujisawa-shi Kanagawa 252 (JP)
(72) Inventor: Kawamura, Hideo, Koza-gun, Kanagawa (JP)
(74) Representative: Flint, Adam

(57) **Abstract**

An improved heat insulating structure is provided in which the movement of air in the air space of a heat insulating layer is as small as possible thus giving a higher heat shielding effect.

A heat insulating layer of an air space is provided between a center tube (31) and an external heat shielding tube (33) in a fuel injection nozzle (3) and a carbon getter (321) is disposed at an interface between the heat insulating layer (32) and a combustion chamber. When a combustion gas moves into the carbon getter (321), its carbon components are trapped and accumulated thus blocking the communication between the heat insulating layer (32) and the combustion chamber. As the heat insulating layer (32) is isolated, its inside air remains stagnate increasing the heat shielding effect. This structure has been applied to the pre-combustion chamber.

## Description

The present invention relates to an internal-combustion engine having a pre-combustion chamber and more particularly , to an internal-combustion engine having a pre-combustion chamber consist of heat insulation member.

In recent years, there has been developed system for an internal-combustion engine having a heat insulated combustion chamber, pre-combustion chamber, exhaust pipe which consist of high toughness ceramic. And this engine has no engine cooling system. Above mentioned heat insulated pre-combustion chamber is further explained. This pre-combustion chamber has an air layer of heat insulating between outside of pre-combustion chamber and engine body. An air layer insulate the heat from pre-combustion chamber when temperature of the layer is the same as the air outsude . But temperature of the air layer rises to the temperature of pre-combustion chamber and air pressure of the air layer rises, it does not insulate the heat from pre-combustion chamber. That is to say, coefficient of heat-transfar of gas fluid is decidedviscosity, temperature and pressure of the gas fluid. The coefficient of heat-transfar ( α g ) of combustion hot gas fluid is 116W/ m², the coefficient of heat-transfar (α g) of normal air is 580W/ m². So that the air layer of the prior art of the engine does not insulate the heat from pre-combustion chamber when the temperature of the air layer is raised. In addition, the air layer's temperature raised by the leakage gas from combustion chamber, the effect of heat insulation of the pre-combustion chamber is decreased.

Accordingly, an object of the present invention is to provide an internal-combustion engine having a pre-combustion chamber consist of heat insulation member, without the air movement in the air layer between combustion chamber and engine body in an engine opperation.

The inventer found that when movement of the air in the layer stoped, the higher heat-insulation is achived.

According to the present invention, there is provided an internal-combustion engine having a pre-combustion chamber consist of heat insulation member and a fuel injection nozzle near pre-combustion chamber comprising: an heat insulation layer among said pre-combustion chamber and outside of said pre-combustion chamber; a carbon getter arranged an entrance of said heat insulation layer made from permeable materials; and carbon particles permeated into said permeable materials and close said entrance of said heat insulation layer.

Accordint to the present invention, there is provided an internal-combustion engine having a pre-combustion chamber consist of heat insulation member and a fuel injection nozzle near pre-combustion chamber comprising: a heat insulation layer made from air gap between a main combustion chamber, a pre-combustion chamber and outside walls; a carbon getter arranged in a gateway of a combustion gas of said heat insulation layer made from permeable materials; and carbon particles permeated into said permeable materials and close said entrance of said heat insulation layer.

According to the present invention, there is provided an internal-combustion engine having a pre-combustion chamber consist of heat insulation member and a fuel injection nozzle near pre-combustion chamber comprising: a heat insulation layer made from air gap and insulating materials between a main combustion chamber, a pre-combustionchamber and outside walls; a carbon getter arranged in a gateway of a combustion gas of said heat insulation layer made from per meable materials; and carbon particles permeated into said permeable materials and close said entrance of said heat insulation layer.

According to the present invention, there is provided an internal-combustion engine having a pre-combustion chamber consist of heat insulation member and a fuel injection nozzle near pre-combustion chamber comprising: a heat insulation layer made from air gap between a central cylinder and heat insulating cylinder of fuel injection nozzle; a carbon getter arranged in a gateway of a combustion gas of said heat insulation layer made from permeable materials; and carbon particles permeated into said permeable materials and close said entrance of said heat insulation layer.

According to the present invention, there is provided an internal-combustion engine having a pre-combustion chamber consist of heat insulation member and a fuel injection nozzle near pre-combustion chamber comprising: a heat insulation layer made from air gap and heat insulating materials between a central cylinder and heat insulating cylinder of fuel injection nozzle; a carbon getter arranged in a gatewayof a combustion gas of said heat insulation layer made from permeable materials; and carbon particles permeated into said permeable materials and close said entrance of said heat insulation layer.

According to the present invention, there is provided an internal-combustion engine having a pre-combustion chamber consist of heat insulation member and a fuel injection nozzle near pre-combustion chamber comprising: a heat insulation layer made from air gap and insulating materials between a main combustion chamber, a pre-combustionchamber and outside walls; a carbon getter arranged in a gateway of a combustion gas of said heat insulation layer made from permeable materials; a carbon particles permeated into said permeable materials and close said entrance of said heat insulation layer; a fuel injection nozzle projecting from center of cylinder head to combustion chamber; a piston having said pre-combustion chamber embedded by said heat insulation layer in the top thereof; and a pre-combustion chamber havinga center opening provided therein for accepting said fuel injection nozzle.

According to the present invention, there is provided an internal-combustion engine having a pre-combustion chamber consist of heat insulation member and a fuel injection nozzle near pre-combustion chamber comprising: a heat insulation layer made from air gap and insulating materials between a main combustion chamber, a pre-combustion chamber and outside walls; a carbon getter arranged in a gateway of a combustion gas of said heat insulation layer made from permeable materials; a carbon particles permeated into said permeable materials and close said entrance of said heat insulation layer; a fuel injection nozzle projecting from center of cylinder head to combustion chamber; a piston having said pre-combustion chamber embedded by said heat insulation layer in the top thereof; a pre-combustion chamber having a center opening provided therein for accepting said fuel injection nozzle; and a plurality of radial gas through hole in said pre-combustion chamber extending at their upper opening ends to the inner wall of the cylinder liner.

Small carbon particles produced by combustion from the combustion engine will be catched by the permeable carbon getter, small holes in the carbon getter will filled by the catched carbon particles. Then the high temperature gas from combustion chamber does not leak to the air layer between pre-combustion chamber and engine body and effect of heat insulation will be improved. Further, small carbon particles catched by carbon getter does not soak into deap portion of carbon getter and catched carbon particles make a heat insulation wall on the surface of carbon getter. This fact is ascertained by the experimentation by the inventer. Then, the effect of heat insulation will be more improved.
Fig.1 is a cross section biew of the pre-combustion chamber of the first embodiment of the present invention.
Fig.2 is the enlarged cross section view of the top portion of injection nozzle.
Fig.3 is the enlarged cross section view of the another top portion of injection nozzle.
Fig.4 is a cross section biew of the pre-combustion chamber of the second embodiment of the present invention.
Fig.5 is the enlarged cross section view of the top portion of injection nozzle of the second embodiment.
Fig.6 is a cross section biew of the pre-combustion chamber of the third embodiment of the present invention.
Fig.7 is a cross section biew of the pre-combustion chamber of the 4th embodiment of the present invention.
Fig.8 is a plane view of the upper portion of the piston of the 4th embodiment of the present invention.

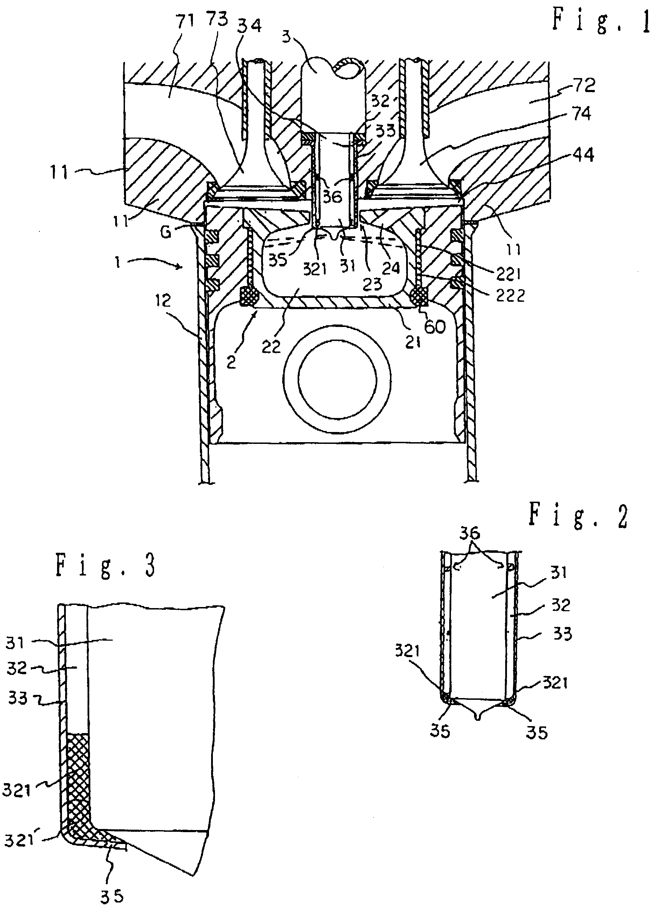

An embodiments of the present invention will be described in more details. Fig.1 is a cross section biew of the pre-combustion chamber of the first embodiment of the present invention. And, Fig.2 is the enlarged cross section view of the top portion of fuel injection nozzle of the present invention. As shown in Fig.1 and Fig.2, numeral 1 denotesan internal combustion engine and numeral 11 denotes the sylinder head of the internal combustion engine 1. Lower side of the sylinder head 11 has a sylinder liner 12, there is a sylinder head gasket G among the sylinder head 11 and the sylinder liner 12 airtightly.

Numeral 2 denotes a piston which is slidably fitted in the sylinder liner 12, the rubbed part of the piston has a piston ring 43. A pre-combustion chamber 21 which made from the high toughness ceramics isprovided of upper and center portion of the piston 2. A central through hole 23 which the fuel injection nozzle pass when piston was positioned in the upper dead center point is provided in the upper wall of the pre-combustion chamber 21. A radially passed gas through holes 24 are provided the periphery of the central through hole 23. The pre-combustion chamber 21 is fixed to the piston 2 by a fixed ring 60. Numeral 22 denotes the combustion space.

Numeral 3 denotes the fuel injection nozzle. The fuel injection nozzle 3 will inject the fuel to the pre-combustion chamber 21 just before the piston 2 arrive it the dead center point. For the purpose of preventing of the temperature rise, a central cylinder 31 of the fuel injection nozzle 3 which include a needle and a fuel path has a heat insulating layer 32 composed from air gap between the central cylinder 31 and heat insulating cylinder 33 made from metal. The surface of the heat insulating cylinder 33 is coated by zirconia ceramics. The top of the heat insulating cylinder 33 is fixed to the fuel injection nozzle 3 by a gasket consisting from familiarized material among the fuel injection nozzle 3 and heat insulating cylinder. Tip of the central cylinder 31 is contacted to the tip 35 of the heat insulating cylinder 33. A permeable carbon getter 321 made from pressed fiber of silicon carbide is provided the lower part of the heat insulating layer 32. Numeral 36 denotes spacer 36. Numeral 71 and 72 denote inlet port and exhaust port composed on the cylinder head 11 opened and closed by intake valve 73 and exhaust valve 74.

The operation of the first embodiment is explained as bellow. In theoperation, The engine 1 will start, the fuel is injected from the fuel injection nozzle 3 to the combustion space 22 of the pre-combustion chamber 21. Injected fuel from the fuel injection nozzle 3 is burned explosively in the pre-combustion chamber 21 and main combustion chamber 44. Exhaust gas produced in the combustion chamber 21 and 44 are exhausted to the outside of the engine 1 in the exhaust stroke. This cyclic operations are continued. In initial operation, small holes of carbon getter 321 do not fill with small carbon particles, so that the explosion gas will influenced to the heat insulating layer 32 of the fuel injection nozzle 3 through to the carbon getter 321.

The initial operation continued for a while, exhaust gas convey a carbon particles to the carbon getter 321, then an entrance of the carbon getter 321 will fill with the carbon particles. Finally, the entrance of the carbon getter 321' will be interrupted with the carbon particles. The carbon getter 321 shut the air in the heat insulating layer 32. So that the heat from the heat insulating cylinder 33 to the central cylinder 31 is blocked. Then the temperature of central cylinder is keeped low. In the first embodiment, the carbon getter 321 is not only made from pressed silicon carbide fiber, but made from porous ceramics for example aluminous porcelain. This structure can be applied to the heat insulation among the pre-combustion chamber 21 and the piston 2. There are heat insulation 221 and 222 as shown in Fig.1. The porosity of the heat insulation 222 is thicker than that of the heat insulation 221.

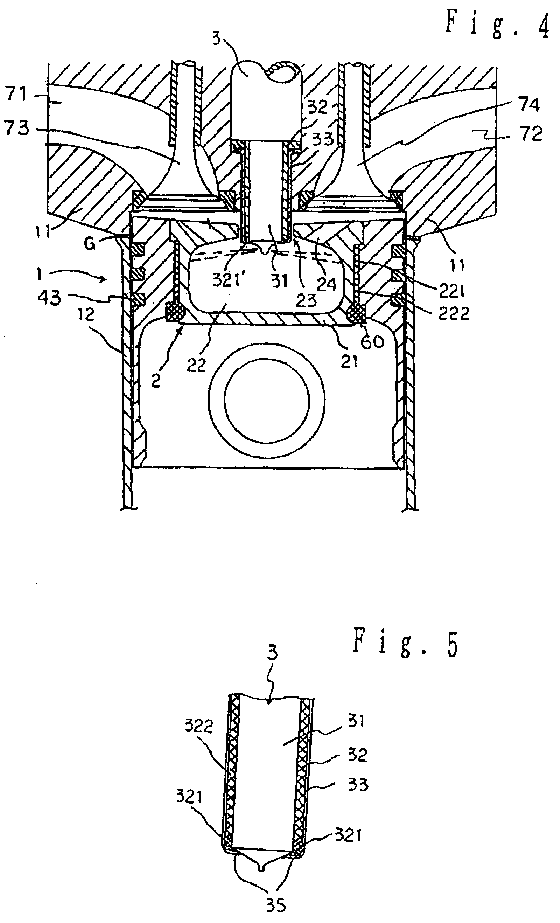

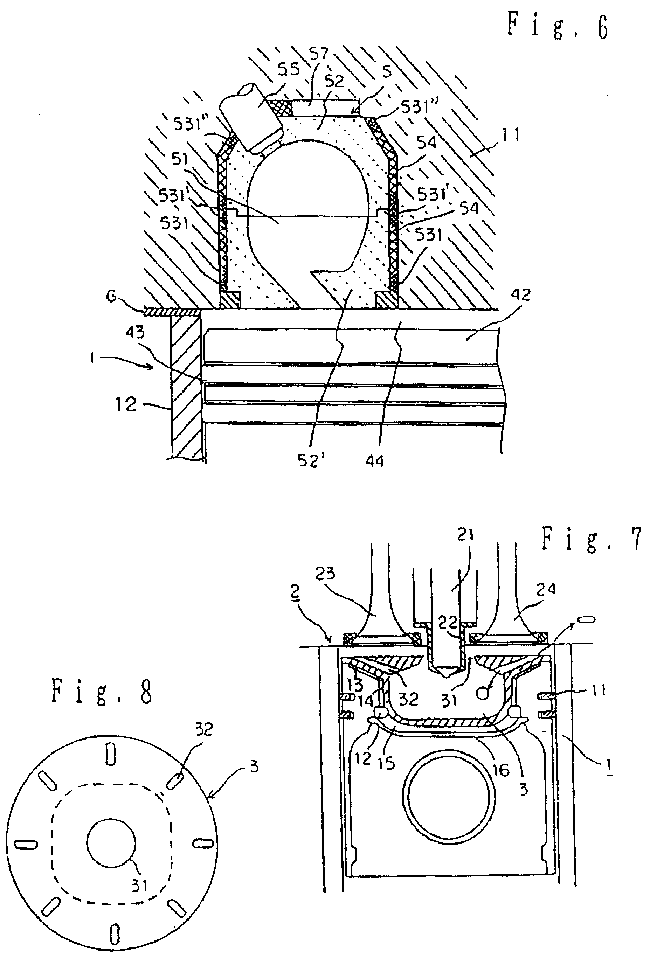

The second embodiment of the present invention will be described inmore details. Fig.4 is a cross section biew of the pre-combustion chamber of the second embodiment of the present invention and Fig.5 is the enlarged cross section view of the top portion of injection nozzle of the second embodiment. In the second embodiment, the heat insulating layer 32 is filled by the porous ceramics or pressed permeable ceramics fiber. The porosity of the heat insulation 321 is thicker than that of the heat insulation 322. Then, the effect of heat insulation will be more improved. In the second embodiment, heat insulating layer 32 has nospacer, because, heat insulation 322 are substituted for spacer. The heat insulation 321 and 322 include the carbon getter will make from porous ceramics and unification . Undoubtedly, the porosity of the heat insulation will gradually changed thick to thin from 321 to 322. In the second embodiment, the same numeral of the first embodiment in Fig. 4 and 5 denote the same parts, explanation of their parts are omitted. Andthe explanation of the operation of second embodiment is omitted becauseof the operation of the second embodiment is the same as first embodiment.

The third embodiment of the present invention will be described in more details. Fig.6 shows a cross section biew of the pre-combustion chamber of the third embodiment of the present invention. Numeral 4 denotes a cylinder liner of the engine 1, the piston 42 having the piston rings 43 is slidably fitted in the cylinder liner 12. Pre-combustion chamber 5 is provided in the cylinder head 11. Numeral 44 denotes a main combustion chamber.

Pre-combustion chamber 5 is constructed from upper cup 52 and lower cup 52' made from silicon nitride ceramics. The pre-combustion chamber 5has a combustion space 51 surrounded by the upper cup 52 and lower cup 52'. For keeping the high temperature of the wall, a heat insulation layer by the air layer is prepared among the pre-combustion chamber 5 and sylinder head 11. A pressed permeable carbon getter 531 made from silicon nitride is inserted in the lowest part of the heat insulation layer. A pressed permeable carbon getter 531' made from silicon nitride is inserted nearby the joint part of upper cup 52 and lower cup 52'. A pressed heat insulation 531'' made from silicon nitride is inserted in the highest part of the heat insulation layer. Heat insulater 54 is prepared between carbon getter 531 and 531'. The porosity of the carbon getter 531 and 531' are thicker than that of the heat insulater 54. Heat insulater 54 is prepared between carbon getter 531' and heat insulation 531''. The porosity of the carbon getter 531' and heat insulation 531'' are thicker than that of the heat insulater 54. Numeral55 denotes a heat insulation layer by the air layer prepared among the pre-combustion chamber 5 and sylinder head 11.

In the third embodiment, heat insulater 54 and heat insulation 531'and 531'' include the carbon getter will make from porous ceramics for example aluminous porcelain and unification. Undoubtedly, the porosity of the heat insulation will gradually changed thick to thin from 531' and 531'' to 54.

The operation of the third embodiment is explained as bellow. In theoperation, The engine 1 will start, the fuel is injected from the fuel injection nozzle 3 to the combustion space 51 of the pre-combustion chamber 5. Injected fuel from the fuel injection nozzle 3 is burned explosively in the pre-combustion chamber 5 and main combustion chamber 44. Exhaust gas produced in the combustion chamber 5 and 44 are exhausted to the outside of the engine 1 in the exhaust stroke. This cyclic operations are continued. In initial operation, small holes of carbon getter 531 and 531' do not fill with small carbon particles, so that the explosion gas will influenced to the heat insulation 54.

The initial operation continued for a while, exhaust gas convey a carbon particles to the carbon getter 531 and 531', then an entrance of the carbon getter 531 and 531' will fill with the carbon particles. Finally, the entrance of the carbon getter will be interrupted with the carbon particles. The carbon getter 531 and 531' shut the air in the heat insulation 54. So that the heat from the pre-combustion chamber 5 to the cylinder 11 is blocked. Then the temperature of the pre-combustion chamber 5 is keeped high. In the third embodiment, the heat insulation 54 and 54 are consisted from air gap without insulation materials.

The 4th embodiment of the present invention will be described in more details. Fig.7 is a cross section blew of the pre-combustion chamber of the 4th embodiment of the present invention. Fig.8 is a planeview of the upper portion of the piston of the 4th embodiment of the present invention . Numeral 12 denotes a cylinder liner of the engine 1, the piston 2 having the piston rings 43 is slidably fitted in the cylinder liner 12. The pre-combustion chamber 21 is embedded in a center region of the top of the piston 2 and made of a highly rigid, heat-resistant composite material such as silicon nitride or aluminum nitride and aluminum base. The pre-combustion chamber 21 has a central through hole 23 provided in the uppermost thereof for accepting a fuel injection nozzle 31 mounted to the cylinder head 11, and plurallity of radial gas through hole 24 therein extending radially and upwardly towards the inner wall of the cylinder liner 12. The side wall opening 24a of the radial gas through hole 24 is formed of a round shape in cross section but its upper opening end 24b has the shape of an elongated circle, as shown in Fig. 8. More particularly, the size of theelongated circle at the opening end is substantially equal to or smaller by up to 80% than that of the round shape at the midway. Numeral 22 denotes a combustion space of the pre-combustion chamber 21. Also, the radial gas through hole 24 extend in spiral about the vertical axis of the cylinder liner 12 so that swirls of flame and unignited fuel gas aregenerated along the inner wall of the cylinder liner 12 after leaving the radial gas through hole 24 of the pre-combustion chamber 21. The pre-combustion chamber 21 is fixedly mounted by a retaining ring 60 to the piston 2. There are also provided a heat shielding material 222 made from ceramics fiber and close stitched material 221 in the clearance between the pre-combustion chamber 21 and the piston 2. A lower cover 62 is coupled through a heat shielding air clearance 61 to the bottom of the pre-combustion chamber 21.

Numeral 71 and 72 denote inlet port and exhaust port composed on the cylinder head 11 opened and closed by intake valve 73 and exhaust valve 74. For the purpose of preventing of the temperature rise, a central cylinder 31 of the fuel injection nozzle 3 which include a needle and a fuel path has a heat insulating layer 32 composed from air gap between the central cylinder 31 and heat insulating cylinder 33 consist of metal. The surface of the heat insulating cylinder 33 is coated by zirconia ceramics. The top of the heat insulating cylinder 33 is fixed to the fuel injection nozzle 3 by a gasket consisting from familiarized material among the fuel injection nozzle 3 and heat insulating cylinder.

The ferture of the 4th embodiment of present invention is to provide a special figure of pre-combustion chamber 21 covered on the head of piston 2. Therefore, the radial gas through holes 24 will open to the main combustion chamber close position to the sylinder 12. Furthermore, the ferture of the 4th embodiment of present invention is to provide a heat shielding material 222 made from ceramics fiber and close stitched material 221 in the clearance between the pre-combustion chamber 21 and the piston 2 for the heat insulation. And operation and effect of the 4th embodiment is the same as its of first and second embodiments.

The operation of the 4th embodiment of present invention will be explained. When the piston 2 moves upwards in the cylinder liner 12 towards the limit of compression stroke with the central through hole 23 of the pre-combustion chamber 21 being almost closed by the injection nozzle 3, compressed air in the pre-combustion chamber 21 causes the inner wall of the pre-combustion chamber 21 to increase rapidly forming a heat layer thereon.

More specifically, since the material of the pre-combustion chamber 21 is very low in the thermal conductivity, a combustion process allows a thin film of high-temperature heat to be developed along the inner wall of the pre-combustion chamber 21.

Then, a fuel introduced from the injection nozzle 3 into the pre-combustion chamber 21 and ignited upon touching the high heat film on the inner wall as well as a compressed air in the pre-combustion chamber 21 carrying a high compression heat. As the central through hole 23 of the pre-combustion chamber 21 has been almost closed down with the piston 2 reaching its upper dead center point, a mixture of flame and unignited fuel gas which is increased in volume by the ignition is instantaneously passed through the radial gas through hole 24 and blown out in all directions against the inner wall of the cylinder liner 12.

The blow of the mixture is distributed to every corner in the cylinder liner 12 due to the outwardly elongated circle shaped openings 24b of the radial gas through hole 24 . At the same time, the spiral configuration of the radial gas through hole 24 about the vertical axis of the piston 2 allows swirls of the blow to be generated in a space of main combustion chamber 44 between upper face of the piston 2 and the inner wall of the cylinder liner 12 and lower face of cylinder dead 11, the inner wall of the cylinder liner 12. The frame and unignited fuel gas are thus mixed with air favorably and burnt drastically in the main combustion chamber 44. This creates a high pressure which in turn presses down the piston 2 to run the engine 1.

As set forth above, the 4th embodiment of the prevent invention provides the pre-combustion chamber having the multiple radial gas through hole as well as the center through hole and embedded in the top of the piston in combination with the fuel injection nozzle on the cylinder accepted in the central through hole. This allows the head of the cylinder to be constructed in a simple arrangement. Also, the radial gas through hole of the pre-combustion chamber extend from the center to the inner wall of the cylinder liner, allowing a mixture of flame and fuel gas produced in the pre-combustion chamber to be readily distributed to every corner in the cylinder liner and thus burnt at a higher efficiency.

It is understood that the present invention is not limited to the prescribed embodiment and various changes and modifications are made without departing from the scope of the present invention as they reside in the prevent invention.

## Claims

1. An internal-combustion engine having a pre-combustion chamber consist of heat insulation member and a fuel injection nozzle near pre-combustion chamber comprising:
an heat insulation layer among said pre-combustion chamber and outside of said pre-combustion chamber;
a carbon getter arranged an entrance of said heat insulation layer made from permeable materials; and
carbon particles permeated into said permeable materials and close said entrance of said heat insulation layer.

2. An internal-combustion engine having a pre-combustion chamber consist of heat insulation member and a fuel injection nozzle near pre-combustion chamber comprising:
a heat insulation layer made from air gap between a main combustion chamber, a pre-combustion chamber and outside walls;
a carbon getter arranged in a gateway of a combustion gas of said heat insulation layer made from permeable materials; and
carbon particles permeated into said permeable materials and close said entrance of said heat insulation layer.

3. An internal-combustion engine having a pre-combustion chamber consist of heat insulation member and a fuel injection nozzle near pre-combustion chamber comprising:
a heat insulation layer made from air gap and insulating materials between a main combustion chamber, a pre-combustion chamber and outside walls;
a carbon getter arranged in a gateway of a combustion gas of said heat insulation layer made from permeable materials; and
carbon particles permeated into said permeable materials and close said entrance of said heat insulation layer.

4. An internal-combustion engine according to claim 3, further including a heat insulation layer and a carbon getter made from permeated ceramic fiber and permeation of heat insulation layer is thinner than that of carbon getter.

5. An internal-combustion engine according to claim 3, further including a heat insulation layer and a carbon getter made from porous ceramics and permeation of heat insulation layer is thinner than that of carbon getter.

6. An internal-combustion engine according to claim 4 or claim 5, further including a heat insulation and a carbon getter made from porous ceramics and unification, a porosity of heat insulation and carbon getter is gradually changed thick to thin from carbon getter to heat insulation.

7. An internal-combustion engine having a pre-combustion chamber consist of heat insulation member and a fuel injection nozzle near pre-combustion chamber comprising:
a heat insulation layer made from air gap between a central cylinder and heat insulating cylinder of fuel injection nozzle;
a carbon getter arranged in a gateway of a combustion gas of said heat insulation layer made from permeable materials; and
carbon particles permeated into said permeable materials and close said entrance of said heat insulation layer.

8. An internal-combustion engine having a pre-combustion chamber consist of heat insulation member and a fuel injection nozzle near pre-combustion chamber comprising:
a heat insulation layer made from air gap and heat insulating materials between a central cylinder and heat insulating cylinder of fuel injection nozzle;
a carbon getter arranged in a gateway of a combustion gas of said heat insulation layer made from permeable materials; and
carbon particles permeated into said permeable materials and close said entrance of said heat insulation layer.

9. An internal-combustion engine according to claim 8, further including a heat insulation layer and a carbon getter made from permeated ceramic fiber and permeation of heat insulation layer is thinner than that of carbon getter.

10. An internal-combustion engine according to claim 3, further including a heat insulation layer and a carbon getter made from porous ceramics and permeation of heat insulation layer is thinner than that of carbon getter.

11. An internal-combustion engine having a pre-combustion chamber consist of heat insulation member and a fuel injection nozzle near pre-combustion chamber comprising:
a heat insulation layer made from air gap and insulating materials between a main combustion chamber, a pre-combustion chamber and outside walls;
a carbon getter arranged in a gateway of a combustion gas of said heat insulation layer made from permeable materials;
a carbon particles permeated into said permeable materials and close said entrance of said heat insulation layer;
a fuel injection nozzle projecting from center of cylinder head to combustion chamber;
a piston having said pro-combustion chamber embedded by said heat insulation layer in the top thereof; and
a pre-combustion chamber having a center opening provided therein for accepting said fuel injection nozzle.

12. An internal-combustion engine according to claim 11, further including a heat insulation layer and a carbon getter made from permeated ceramic fiber and permeation of heat insulation layer is thinner than that of carbon getter.

13. An internal-combustion engine according to claim 11 or claim 12, further including a heat insulation layer and a carbon getter made from porous ceramics and permeation of heat insulation layer is thinner than that of carbon getter.

14. An internal-combustion engine having a pre-combustion chamber consist of heat insulation member and a fuel injection nozzle near pre-combustion chamber comprising:
a heat insulation layer made from air gap and insulating materials between a main combustion chamber, a pre-combustion chamber and outside walls;
a carbon getter arranged in a gateway of a combustion gas of said heat insulation layer made from permeable materials;
a carbon particles permeated into said permeable materials and close said entrance of said heat insulation layer;
a fuel injection nozzle projecting from center of cylinder head to combustion chamber;
a piston having said pre-combustion chamber embedded by said heat insulation layer in the top thereof;
a pre-combustion chamber having a center opening provided therein for accepting said fuel injection nozzle; and
a plurality of radial gas through hole in said pre-combustion chamber extending at their upper opening ends to the inner wall of the cylinder liner.

15. An internal-combustion engine according to claim 14, further including said radial gas through holes are each formed of a round shape in cross section at its pre-combustion chamber side end and an elongated circle shape at its cylinder liner side upper opening end and are arranged in a spiral configuration about the vertical axis of the piston.
